# EUROPEAN PATENT SPECIFICATION

(11) **EP 0 637 144 B1**
(45) Date of publication and mention of the grant of the patent: **12.09.2001**
(21) Application number: 94200700.6
(22) Date of filing: 18.03.1994
(51) Int. Cl.: H04B 7/26

(54) **Two-way communication method between portable parts and radio fixed part through a repeater device in a cordless DECT system**
Duplex Übertragungsverfahren zwischen mobilen und ortsgebundenen Teile über eine Relaisstation in einem schnurlose DECT Anordnung
Méthode de communication duplex entre des parties portables et fixes à travers un répéteur dans un système sans fil DECT

(30) Priority: 30.07.1993 IT MI931716
(43) Date of publication of application: 01.02.1995
(73) Proprietor: Siemens Information and Communication Networks S.p.A., 20126 Milano (IT)
(72) Inventor: Rosina, Giancarlo, I-20018 Sedriano (MI) (IT); De Benedittis, Rossella, I-20020 Barbaiana di Lainate (MI) (IT)
(74) Representative: Giustini, Delio

(56) References cited:
- EP-A- 0 210 811
- EP-A- 0 445 887
- EP-A- 0 468 569
- EP-A- 0 497 490
- US-A- 2 642 524

## Description

### Field of the Invention

The present invention relates to a method for the two-way communication of digital signals among mobile subscriber stations and radio fixed parts by means of repeater devices in a cordless DECT system.

The systems of private telephony comprise a plurality of radio base transceiver stations distributed in a way to cover the interested area, and linked to a switching network which may be the public one or a switching network of the Private Automatic Branch Exchange (PABX), and private subscriber sets connecting via radio with the radio fixed parts, and they are therefore able to communicate among themselves and other fixed subscribers linked to the public telephone network. The links may be of the vocal type or they may allow the exchange of data by occupying the equivalent of one or more vocal "channels".

The area covered by a radio fixed part or cell is generally quite reduced covering sometimes just a radius of some tens or hundreds of meters. Typical applications of the private telephone systems are found in industrial plants where they may replace the installation of a cabled network, and in commercial or urban centers, where they may advantageously replace the public telephone boxes and others.

The telecommunication network for private telephony is of the digital type. The radio access is in particular of the type FDMA -TDMA - TDD.

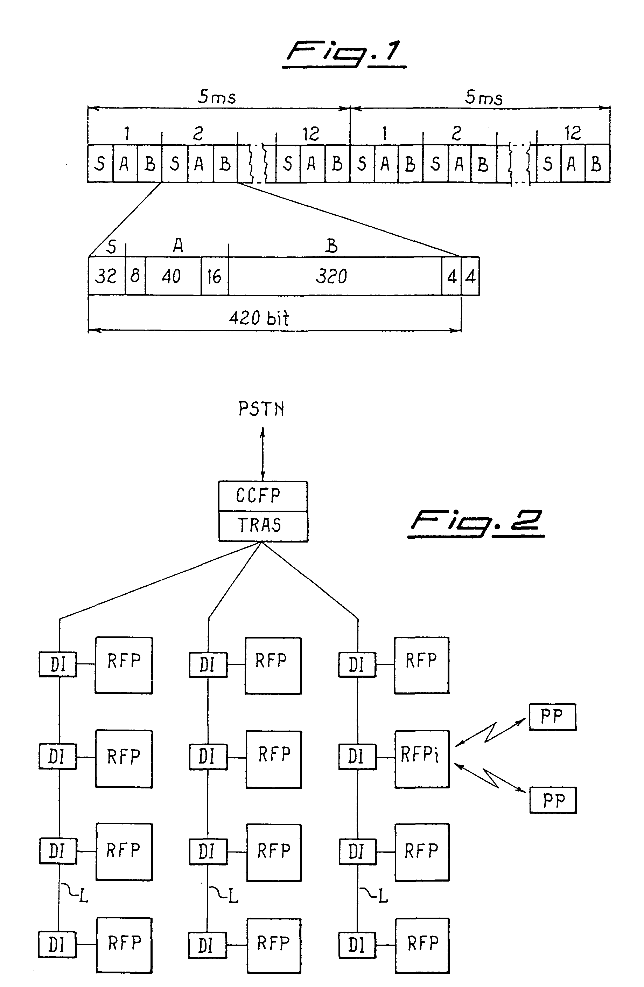

The system is of the TDD type as transmission and reception do not take place simultaneously. More precisely, as illustrated in figure 1, the base frame of 10 milliseconds is divided in two halves: in the first 5 ms the radio fixed part transmits and the portable sets receive a half frame (the TX DECT half frame for the radio fixed part, and the RX DECT half frame for the portable set), and in the following 5 ms the contrary occurs. Each half frame is set up by 12 time slots 1, 2, ..., 12 (from this it results that it is a TDMA system), each one of which is set up by 420 (or according to the some 424) bits. The time slots are transmitted or received by using 10 different frequencies (from this it turns out to be an FDMA system) for a total of 120 channels available to the system, which are naturally reassigned to cells sufficiently distant one from the other in order not to create interference problems.

Each time slot is subdivided in a synchronism field S of 32 bits, in a field A of 8 + 40 bits with relative 16 control bits, and in a field B of 320 bits where bits are allocated which are obtained by coding the vocal samples of a corresponding subscriber.

Figure 2 shows schematically a typical structure of a DECT network as an example.

It comprises groups of N (in the illustrated example N = 4) radio fixed parts RFP (Radio Fixed Part) connected to branches (in the illustrated example there are 3 branches) set up by link lines or dorsals L by means of drop/insert means. Each radio fixed part RFPi may handle via radio a certain number of PPs subscribers (Portable Parts) which are generally mobile. The branches link up with a battery of transcoders TRAS, and the last one is linked to the Public Switching Telephone Network PSTN through a central control fixed part CCFP. In some applications the functions carried out by the CCFP may be inserted in a subscriber board of a switching exchange or of a PABX.

The interface between the CCFP and the DECT network for what regards the vocal signal is typically set up by digital channels of 64 Kbit/s (8000 samples/sec. each one codified by 8 bits). To the CCFP unit a battery of transcoders TRAS is linked providing for the conversion of the PCM transcoding from eight bits used on the PSTN side in an ADPCM coding (Adaptive Differential Pulse Code Modulation) on four bits used on the DECT side. The (bi-directional) dorsal = at 2.048 Mbit/s connecting the CCFP with the different radio fixed parts RFP supports therefore 48 voice channels plus an undefined number of synchronism and signalling channels. In the DECT system the vocal service is supported by the activation of a logical channel called "In minimum delay" on which every 10 msec. in one of the twelve time slots constituting the TDMA DECT frame the bits representing the 80 samples related to one vocal segment of 10 msec are transmitted. These samples together set up a block of 320 bits per frame being transmitted via radio to the portable subscriber part PP in the B field of the DECT slot (see also figure 1).

For what regards the transmission from PP to RFP the procedure of data transfer is exactly symmetric, respecting therefore absolutely the TDD modality.

However in some applications the level of the radio signal between the subscriber sets PP and the radio fixed part is not always sufficient to guarantee a good quality link when changing the position of the PPs compared to the RFP.

This may happen for example when the portable part is used in closed rooms where the radio signal level depends obviously on the walls and the geometry of the room.

A first solution to this problem consists simply in increasing the power of the transceiver unit of the PP sets and of the RFP stations.

However this comprises considerable increases of costs and sizes and of the weight of the PP sets. Moreover this increases also the electric energy absorption and a consequent reduction of the functional autonomy of the PP sets themselves.

A second solution consists in the installation of repeater devices between the RFP stations and the mobile PP sets.

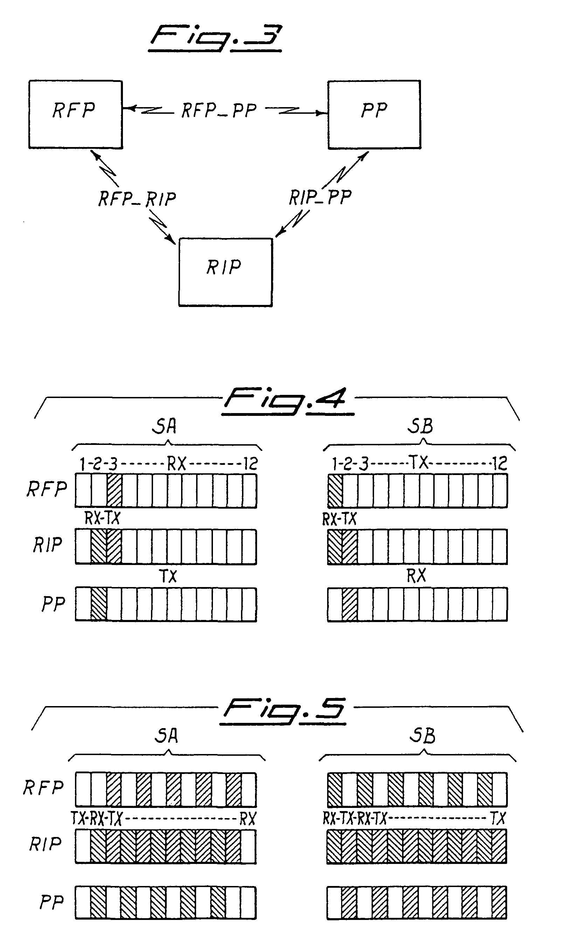

Figure 3 shows an operative scenario including a repeater device indicated by RIP, an RFP station and a mobile set PP.

The signals emitted by the RFP station reach the repeater RIP on a bi-directional radio link indicated by RFP_RIP. These signals are then transmitted by the repeater RIP to the PP set on a bi-directional link RIP_PP.

Dually the signals emitted by PP reach the RFP on the link RIP_PP and after that they are transmitted by RIP to RFP on the RFP_RIP link.

The presence of the repeater however does not exclude the possibility of a direct bi-directional radio link RFP_PP between the RFP station and the portable part.

The RIP device should be realized principally in a way maintaining a complete separation and mutual independence between the RFP_RIP and RIP_PP links. This implies a major complexity compared to a normal RFP.

### Background of the Invention

Solutions are known providing for the realization of the RIP module with a hardware structure similar to that of a PP set and with an opportunely adapted software. But these solutions present the drawback of introducing a constant delay of 10ms on the way of the signal and imply the adoption of echo cancellers (for example in the CCFP unit) conceptually different compared to those adopted in the cordless DECT system without repeaters.

### Objects of the Invention

An object of the present invention is therefore to identify a method making it possible to insert a repeater on the link line between a radio fixed part PPs belonging to a cordless DECT system without the above mentioned drawbacks in terms of introduction of time delays and in terms of reduction of the number of available channels.

A further object of the present invention is to identify a method allowing the use of PPs which have not to carry out some additional functions compared to the standard ones so to avoid the use of a first typology of handsets when the relay function is applied of the repeater and a second typology of handsets when the relay function is not applied.

### Disclosure of the Invention

The invention consists more precisely of a method for the two-way communication of digital signals between portable parts and radio fixed part through repeater devices in a cordless DECT system in which the transmission and the reception occur in TDD (Time Division Duplex) modality by the transfer of base frames divided in two half frames, each one being divided in N time slots, during the first of said half frames the portable part being in transmission condition and the radio fixed part being in reception condition, and during the following one of said two half frames the portable part being in reception condition and the radio fixed part being in transmission condition, characterized in that it includes the following steps:
- transmitting by means of said portable part a first information packet in a first time slot of the first half frame TX-DECT for the portable part;
- receiving said first information packet through said repeater device connected between said portable part and said radio fixed part;
- storing said first information packet in said repeater device and duplicating it in a second time slot of said first half frame following said first time slot;
- retransmitting in the same half frame to said radio fixed part said first information packet through said repeater device during a second time slot of said first half frame following said first time slot;
- transmitting through said radio fixed part a second information packet in response to said first information packet during a first time slot of said second half frame;
- receiving said second information packet through said repeater device;
- storing said second information packet in said repeater device and duplicating it in a second time slot of said second half frame following said first time slot;
- modifying the information related to the time slot number allocated in the messages emitted by the radio fixed part;
- retransmitting in the same half frame to said portable part said second information packet, through said repeater device, during a second time slot of said second half frame corresponding to the first time slot of said first half frame during which said portable part had previously transmitted said first information packet.

Further advantageous characteristics are subject of the appended claims.

### Brief Description of the Drawings

The invention will now be illustrated in a more detailed way referring to a preferred but not limiting embodiment together with the enclosed drawings wherein:
figure 1 already described shows the organization of a DECT frame;
figure 2 already described represents a general diagram of a cordless system of the DECT type;
figure 3 already described shows a link scheme of a repeater device RIP;
figure 4 shows the two-way communication method according to the present invention;
figure 5 shows the general use of the half frame resulting from the application of the two-way communication method according to the present invention.

Referring to Figure 4, it is shown for each one of the equipments RFP, RIP and PP two half frames of 5 ms indicated by SA and SB, respectively. Each one of the 12 boxes 1, 2, ..., 12 of the half frame indicates a respective time slot.

It must be noticed that the transmission operations are preceded by the transmission from the RFP unit of a prohibition information for the PP unit to reach a first subgroup of time channels (for example uneven time channels) in order to avoid the attempt by the PP units to get access to channels which are prohibited. This prohibition operation is preferably carried out by the PT message (blind slot information).

Obviously the radio fixed part must be adapted in a way to guarantee that the system information turn out to be accessible for all portable parts (for example if the access to the odd time slots has been prohibited the system information have to be transmitted by the RFP at least on one odd time slot).

In the half frame SA the part PP is in transmission condition TX while the RFP part is in reception condition RX. The portable part PP transmits for example on a time slot 2.

The content of this time slot 2 is received by the repeater RIP which after having modified some bits of its data field (marking operation) duplicates it in the following time slot, that is in time slot 3, and retransmits it towards the radio fixed part RFP. In this figure and in the following one Nr. 5 the normal channels are pointed out by a hatching inclined to the left and the duplicated channels by a hatching inclined to the right.

The repeater RIP passes therefore from phase TX to phase RX not on the basis of half frames but on the basis of a single time slot as also shown in figure 5.

In particular the repeater RIP, just before going in service:
- scans the radio environment looking for a good dummy bearer to lock to, and once lock performed,
- retransmits the detected dummy bearer onto one of the following slots, after interference check, in downlink direction;
- assumes the TX/RX configuration on slot basis and acquires the same radio scanning sequence of the RFP is locked to.

The dummy is retransmitted changing the identity FMID (Fixed Mac IDentity) of the radio fixed part RFP into the repeater identity RFMID (Repeater Fixed Mac IDentity) and the slot number indication into the chosen slot number when these information are sent.

During the TX time slots the repeater RIP emits the radio signal received in the previous RX slot, if the repeater handles the connection (if not it is always in RX mode).

The modification (marking operation) the repeater carries out on the data packet received on a time slot consists in setting appropriate bits of A field in a way to mark the TDMA packet as a packet sent by a repeater RIP.

This allows the RFP station to distinguish the slots joining through a repeater RIP from those joining directly from the portable part PP.

This type of marking regards obviously only the content of the time slots passing through the repeater RIP and arriving from PP (direction uplink).

It is possible to envisage an indirect marking: if the repeater checks identities RFMID and PMID (Portable Mac IDentities) and leaves them unchanged for retransmission, RFP is aware of the marking operation.

In the following half frame SB the part PP is put in reception condition while the RFP part is put in transmission condition.

Examining the content of the bits of A field of the just received data packet the RFP part is informed about the fact that this packet arrives from the repeater RIP and not directly from the part PP. Then the RFP part sends to the repeater RIP on time slot 1 of the half frame SB a data packet in response to the packet received on time slot 3 in the previous half frame.

More in general the RFP part is programmed in a way to send a packet to the repeater RIP on the time slot i-2 in response to a packet received from the repeater RIP on time slot i.

The content of time slot 1 is received by the repeater RIP which duplicates it in the next time slot, that is in time slot 2, and retransmits it to the portable part PP after interference check. At the moment of the duplication the unit RIP however provides for the modification of the information related to the slot number allocated in the messages Qt emitted by the RFP unit and changes the FMID into its RFMID when this information appears. The unit RIP provides in this way for the incrementation of one unit the current slot number, expressed by means of some bits of A field.

This incrementation operation allows the part PP to correlate the information Qt with the real position of the time slot.

Using the above described method it turns out that it is possible to use a standard-portable part PP suitable to receive the information it is concerned by in the down-link slot coinciding with the slot used on the up-link side.

The portable part PP having transmitted during the half frame SA on time slot 2 receives in this way a response in the half frame SB on the same time slot 2.

This happens also in the case there is a direct link between the part PP and the RFP part without the intervention of the repeater RIP.

In fact in this case the RFP receives data packets from PP not marked by a repeater RIP.

Then the RFP part simply transmits the response data packet on the time slot corresponding to that on which the data packet has been received in the preceding half frame.

According to an alternative embodiment of the method according to the invention it turns out to be possible to avoid the marking operation carried out by the unit RIP, but with the drawback that the unit PP must be adapted to discriminate - in the down-link direction - if it will syntonize on the time slot received from the unit RIP (in the example of figure 4 slot 2) or on the slot received directly from the RFP part (in the example of figure 4 slot 1).

A possible discriminating criterion for example could be that of syntonizing on the slot most free from troubles or on a predetermined sequence of time slots like for example the odd time slots.

Using this alternative embodiment of the method it is necessary to use a mobile unit suitable to carry out the discrimination as explained above.

In relation to what explained before the following functioning modalities turn therefore out to be possible:
1) standard modality with a direct link between the RFP part and the PP part;
2) modality with slot duplication and marking carried out by the unit RIP;
3) modality with slot duplication carried out by the unit RIP, but which in this case does not carry out the marking operation.

It is possible to appreciate the fact that through a similar method no additional delay will be introduced in the communications between RFP and PP because of the presence of the repeater RIP.

The capacity of the system RFP-RIP-PP turns out to be reduced in terms of the number of available channels to little less than the half compared to an equivalent system without repeater.

In fact while the slots number occupied by a complete cycle of two-way communication turns out to be doubled, the number of half frames necessary for the development of this cycle remains always the same, that is equal to two half frames.

With reference to figure 5 illustrating the overall use of the half frames SA and SB it is possible to notice that, if for example the transmission by the portable part PP occupies the even time slots (2, 4, 6, 8, 10) all time slots (1...12) of the repeater RIP turn out to be completely occupied.

A further considerable advantage is due to the fact that, at least with reference to the functioning modality countersigned before by the number 2, the mobile part PP has not to carry out any additional function due to the existence of the repeater RIP.

The portable part PP in fact transmits on one time slot and receives the response on the same time slot in the next half frame without participating at all in the duplication, marking and two-way communication operations of the data packet.

These operations are exclusively at the charge of the RFP and RIP equipment permitting to use absolute standard type portable parts PP independently from the existence of repeaters RIP on the radio link with the RFP part.

Without departing from the ambit of the present invention it turns out that it is possible to dedicate some time slots, and consequently some communication channels between RIP and PP for maintenance communications.

From the above mentioned results to be obvious that the invention foresees the realization of the module RIP with a hardware structure similar to that of a radio fixed part RFP or of a device implementing the physical DECT level and the MAC level (Medium Access Control). Where for the realization of the module RIP the hardware of a RFP part with space diversity is used (or of a device equipped with two antennas - selectable for example in response to the activation of a switch - which support a unique radio link) it turns out to be convenient, always without departing from the ambit of the invention, always to support a separate radio link by each of the two antennas.

In other words one of these antennas would support the radio link RIP_PP while the other antenna would support the radio link RIP_RFP.

It is evident that the description here above has been given as a not limiting example. Variations and modifications are possible without departing from the protection of the following claims.

## Claims

1. Method for the two-way communication of digital signals between portable parts and radio fixed parts through repeater devices (RIP) in a cordless DECT system in which the transmission and the reception occur in TDD that is Time Division Duplex, modality by the transfer of base frames divided in two half frames (SA, SB), each one being divided in N time slots, during the first of said half frames the portable part (PP) being in transmission condition and the radio fixed part (RFP) being in reception condition, and during the following one of said two half frames the portable part (PP) being in reception condition and the radio fixed part (RFP) being in transmission condition, **characterized in that** it includes the following steps:
- transmitting by means of said portable part (PP) a first information packet in a first time slot of the first half frame TX-DECT for the portable part (PP);
- receiving said first information packet through said repeater device (RIP) connected between said portable part (PP) and said radio fixed part (RFP);
- storing said first information packet in said repeater device (RIP) and duplicating it in second time slot of said first half frame following said first time slot;
- retransmitting in the same half frame to said radio fixed part (RFP) said first information packet through said repeater device (RIP) during a second time slot of said first half frame (SA) following said first time slot;
- transmitting through said radio fixed part (RFP) a second information packet in response to said first information packet during a first time slot of said second half frame (SB);
- receiving said second information packet through said repeater device (RIP);
- storing said second information packet in said repeater device (RIP) and duplicating it in a second time slot of said second half frame following said first time slot;
- modifying the information relating to the time slot number allocated in the messages (Qt) emitted by the radio fixed part (RFP);
- retransmitting in the same half frame to said portable part (PP) said second information packet, through said repeater device (RIP), during a second time slot of said second half frame (SB) corresponding to the first time slot of said first half frame (SA) during which said portable part (PP) had previously transmitted said first information packet.

2. Method as claimed in Claim 1, **characterized in that** it includes the following steps:
- transmitting from said radio fixed part (RFP) an information addressed to the portable parts (PP) in order to prohibit the access to a predetermined time slots sequence;
- transmitting through said portable part (PP) said first information packet in a first time slot of the first half frame TX-DECT (SA) for the portable part (PP);
- receiving said first information packet through said repeater device (RIP);
- storing said first information packet, after checking the identity (FMID) of the radio fixed part, in said repeater device (RIP) and duplicating it in a second time slot of said first half frame following said first time slot, after interference control;
- marking said first information packet stored in said repeater device (RIP);
- retransmitting in the same half frame to said radio fixed part (RFP) said first marked information packet through said repeater device (RIP) during a second time slot of said first half frame (SA) just after said first time slot;
- transmitting through said radio fixed part (RFP) a second information packet, in response to said first marked information packet, during a first time slot of said second half frame (SB) put ahead by two positions with respect to the first time slot of said first half frame (SA) during which said radio fixed part had received said first information packet;
- receiving said second information packet through said repeater device (RIP) ;
- storing said second information packet in said repeater device (RIP) and duplicating it in a second time slot of said second half frame following said first time slot changing the identity (FMID) of the radio fixed part (RFP)into the identity (RFMID) of the repeater (RIP) device;
- modifying the information relating to the slot number allocated in the messages (Qt) emitted by the radio fixed part (RFP);
- retransmitting to said portable part (PP) said second information packet through said repeater device (RIP) during a second time slot of said second half frame (SB) immediately after the first time slot of said second half frame (SB) during which said repeater device (RIP) had previously received said second information packet.

3. Method as claimed in claim 2, **characterized in that** said information addressed to the portable parts (PP) prohibits the access to the odd time channels in order not to allow the access to a predetermined channel sequence.

4. Method as claimed in claim 2, **characterized in that** said information addressed to the portable parts (PP) prohibits the access to the even time channels in order not to allow the access to a predetermined sequence of channels.

5. Method as claimed in claim 2, **characterized in that** the transmission by said radio fixed part (RFP) of an information addressed to the portable parts (PP) is carried out by the message PT "blind slot information" in order to prohibit the access to a predetermined time slots sequence.

6. Method as claimed in the preceding claims, **characterized in that** the radio fixed part (RFP) is able to guarantee that the system information turn out to be accessible for all portable parts (PP).

7. Method as claimed in claims 1 and 2, **characterized in that** said modifying operation of the information relating to the slot number emitted by the radio fixed part is carried out by said repeater device (RIP) changing the identity (FMID) of the radio fixed part (RFP) in downlink direction.

8. Method according to claim 1 and 2, **characterized in that** said repeater (RIP) passes from a receiving phase (RX) to a transmitting phase on the base of a single time slot.

9. Method as claimed in claim 8, **characterized in that** said repeater (RIP), just before going in service:
- scans the radio environment looking for a good dummy bearer to lock to, and once the lock is performed,
- retransmits the detected dummy bearer onto one of the following slots, after interference check, in downlink direction;
- assumes the TX/RX configuration on slot basis and acquires the same radio scanning sequence of the RFP is locked to.

10. Method as claimed in claim 8, **characterized in that** said repeater (RIP) during the TX time slot , if handles this connection, emits the radio signal received in the previous RX slots.

11. Method as claimed in claim 10, **characterized in that** said repeater (RIP) during the TX time slot , if does not handle this connection is always in RX mode.

12. Method as claimed in claim 9, **characterized in that** said dummy signal is retransmitted changing the identify FMID, that is Fixed Max IDentity, of the radio fixed part RFP into the repeater identity RFMID, that is Repeater Fixed Mac IDentity, and the slot number indication into the chosen slot number.

13. Method as claimed in claim 2 **characterized in that** said marking operation is an indirect marking.

## Patentansprüche

1. Es handelt sich um ein Verfahren für die Duplexübertragung von Digitalsignalen zwischen den Mobilgeräten und der Funkbasisstation über Zwischenverstärker (RIP) in einem schnurlosen DECT-System. Senden und Empfangen erfolgt im TDD (Time Division Duplex)-Modus durch Übertragung von Basisrahmen, die jeweils in zwei Halbrahmen (SA, SB) und diese wiederum in N Zeitschlitze unterteilt sind. Während des ersten Halbrahmens des Mobilgeräts (PP) ist das Mobilgerät im Sendemodus und die Funkfeststation (RFP) im Empfangsmodus, während des zweiten Halbrahmens umgekehrt. Das Verfahren ist durch folgende Vorgänge gekennzeichnet:
- Das Mobilgerät (PP) sendet ein erstes Informationspaket in einem ersten Zeitschlitz des ersten Halbrahmens TX-DECT für das Mobilgerät (PP)
- Der oben erwähnte Zwischenverstärker (RIP) ist zwischen das Mobilgerät (PP) und die Funkfeststation (RFP) geschaltet und empfängt dieses erste Informationspaket
- Das erste Informationspaket wird im Zwischenverstärker (RIP) gespeichert und in einen zweiten Zeitschlitz des ersten Halbrahmens dupliziert, der dem ersten Zeitschlitz folgt
- Weitersenden des ersten Informationspakets zur Funkfeststation (RFP) im selben Halbrahmen über den Zwischenverstärker (RIP) in einem zweiten Zeitschlitz des ersten Halbrahmens (SA) im Anschluss an den ersten Zeitschlitz
- Senden eines zweiten Informationspakets durch die Funkfeststation (RFP) als Antwort auf das erste Informationspaket im ersten Zeitschlitz des zweiten Halbrahmens (SB)
- Empfang des zweiten Informationspakets durch den Zwischenverstärker (RIP)
- Speichern des zweiten Informationspakets im Zwischenverstärker (RIP) und Duplizieren in einen zweiten Zeitschlitz des zweiten Halbrahmens im Anschluss an den ersten Zeitschlitz
- Änderung der Angaben zur Zeitschlitznummer, die in den von der Funkfeststation (RFP) gesendeten Nachrichten (Qt) enthalten sind
- Weitersenden des zweiten Informationspakets zum Mobilgerät (PP) im selben Halbrahmen über den Zwischenverstärker (RIP) in einem zweiten Zeitschlitz des zweiten Halbrahmens (SB) entsprechend dem ersten Zeitschlitz des ersten Halbrahmens (SA), in dem das Mobilgerät (PP) vorher das erste Informationspaket gesendet hatte.

2. Das in Patentanspruch 1 beschriebene Verfahren unter Einschluss der folgenden Schritte:
- Senden einer Information von der Funkfeststation (RFP) zum Mobilgerät (PP), um den Zugriff auf eine vorbestimmte Zeitschlitzabfolge zu verhindern
- Senden des ersten Informationspakets über das Mobilgerät (PP) in einem ersten Zeitschlitz des ersten Halbrahmens TX-DECT (SA) für das Mobilgerät (PP)
- Empfang des ersten Informationspakets durch den Zwischenverstärker (RIP)
- Nach einer Störungsprüfung und der Überprüfung der Identität (FMID) der Funkfeststation wird das erste Informationspaket im Zwischenverstärker (RIP) gespeichert und in einen zweiten Zeitschlitz des ersten Halbrahmens dupliziert, der dem ersten Zeitschlitz folgt
- Markierung des ersten Informationspakets im Zwischenverstärker (RIP)
- Weitersenden des ersten markierten Informationspakets zur Funkfeststation (RFP) im selben Halbrahmen über den Zwischenverstärker (RIP) in einem zweiten Zeitschlitz des ersten Halbrahmens (SA) direkt im Anschluss an den ersten Zeitschlitz
- Senden eines zweiten Informationspakets durch die Funkfeststation (RFP) im ersten Zeitschlitz des zweiten Halbrahmen (SB) als Antwort auf das erste markierte Informationspaket, wobei das Informationspaket bezüglich des ersten Zeitschlitzes des ersten Halbrahmens (SA), in dem die Funkfeststation das erste Informationspaket empfangen hatte, um zwei Positionen nach vorn verschoben wird.
- Empfangen des zweiten Informationspakets durch den Zwischenverstärker (RIP).
- Speichern des zweiten Informationspakets im Zwischenverstärker (RIP) und Duplizieren in einen zweiten Zeitschlitz des zweiten Halbrahmens im Anschluss an den ersten Zeitschlitz, wobei die Identität (FMID) der Funkfeststation (RFP) auf die Identität (RFMID) des Zwischenverstärkers (RIP) geändert wird
- Änderung der Angaben zur Zeitschlitznummer, die in den von der Funkfeststation (RFP) gesendeten Nachrichten (Qt) enthalten sind
- Weitersenden des zweiten Informationspakets zum Mobilgerät (PP) über den Zwischenverstärker (RIP) in einem zweiten Zeitschlitz des zweiten Halbrahmens (SB) unmittelbar im Anschluss an den ersten Zeitschlitz des zweiten Halbrahmens (SB), in dem der Zwischenverstärker (RIP) vorher das zweite Informationspaket empfangen hatte.

3. Verfahren entsprechend Patentanspruch 2, bei dem die vorgenannten an die Mobilgeräte (PP) gesendeten Informationen den Zugriff auf die ungeraden Zeitkanäle verhindern, um den Zugriff auf eine vorbestimmte Kanalfolge zu unterbinden

4. Verfahren entsprechend Patentanspruch 2, bei dem die vorgenannten an die Mobilgeräte (PP) gesendeten Informationen den Zugriff auf die geraden Zeitkanäle verhindern, um den Zugriff auf eine vorbestimmte Kanalfolge zu unterbinden

5. Verfahren entsprechend Patentanspruch 2, bei dem die Funkfeststation (RFP) die Nachricht PT "blind slot information" ("Pseudozeitschlitzinformationen") an die Mobilgeräte (PP) überträgt, um den Zugriff auf eine vorbestimmte Kanalfolge zu unterbinden

6. Verfahren entsprechend den vorgenannten Patentansprüchen, bei dem die Funkfeststation (RFP) garantieren kann, dass alle Mobilgeräte (PP) Zugriff auf die Systeminformationen haben.

7. Verfahren entsprechend den Patentansprüchen 1 und 2, bei dem die von der Funkfeststation gesendete Anweisung zur Änderung der Informationen über die Zeitschlitznummer vom Zwischenverstärker (RIP) durchgeführt wird. Dabei wird die Identitätsänderung (FMID) der Funkfeststation (RFP) in Downlink-Richtung vorgenommen.

8. Verfahren entsprechend den Patentansprüchen 1 und 2, bei dem der Zwischenverstärker (RIP) aufgrund eines einzelnen Zeitschlitzes vom Empfangsbetrieb (RX) in den Sendebetrieb übergeht.

9. Das in Patentanspruch 8 beschriebene Verfahren, bei dem der Zwischenverstärker (RIP) unmittelbar vor dem eigentlichen Nutzbetrieb folgende Funktionen ausführt:
- Absuchen des Frequenzspektrums, um einen geeigneten Pseudoträger zu suchen und sich auf diesen genau einzustellen, danach
- nach einer Störungsprüfung Weitersenden des gefundenen Pseudoträgers in einem der folgenden Zeitschlitze in Downlink-Richtung
- Übernahme der TX/RX-Konfiguration entsprechend der Einstellung der Zeitschlitze und Übernahme derselben Funkscanfolge, auf die sich RFP eingestellt hat.

10. Das in Patentanspruch 8 beschriebene Verfahren, bei dem der Zwischenverstärker (RIP) im TX-Zeitschlitz das in den vorherigen RX-Zeitschlitzen empfangene Funksignal sendet, falls die Verbindung vom Zwischenverstärker abgewickelt wird.

11. Das in Patentanspruch 10 beschriebene Verfahren, bei dem sich der Zwischenverstärker (RIP) im TX-Zeitschlitz stets im RX-Modus befindet, falls die Verbindung nicht vom Zwischenverstärker abgewickelt wird.

12. Verfahren entsprechend Patentanspruch 9, bei dem das Pseudosignal erneut gesendet wird, um die Identität FMID (Fixed Max Identity) von Funkfeststation (RFP) auf die Zwischenverstärkeridentität FRMID zu ändern (Repeater Fixed Mac Identity) und die Zeitschlitznummer zu verändern.

13. Das in Patentanspruch 2 beschriebene Verfahren, wobei zur Markierung ein indirektes Markierungsverfahren verwendet wird.

## Revendications

1. Procédé de communication duplex de signaux numériques entre des parties portables et des parties fixes par l'intermédiaire de répéteurs (RIP) dans un système sans fil DECT dans lequel l'émission et la réception se déroulent selon la modalité TDD, c'est-à-dire en duplex à répartition dans le temps, par le transfert de trames de base divisées en deux demi-trames (SA, SB), chacune étant divisée en N tranches de temps, la partie portable (PP) étant dans un état d'émission et la partie fixe (RFP) étant dans un état de réception durant la première desdites demi-trames, et la partie portable (PP) étant dans un état de réception et la partie fixe (RFP) étant dans un état d'émission durant la suivante desdites deux demi-trames, **caractérisé en ce qu'**il comprend les étapes suivantes :
- transmettre au moyen de ladite partie portable (PP) un premier paquet d'informations dans une première tranche de temps de la première demi-trame TX-DECT pour la partie portable (PP) ;
- recevoir ledit premier paquet d'informations par l'intermédiaire dudit répéteur (RIP) monté entre ladite partie portable (PP) et ladite partie fixe (RFP) ;
- stocker ledit premier paquet d'informations dans ledit répéteur (RIP) et le dupliquer dans la seconde tranche de temps de ladite première demi-trame suivant ladite première tranche de temps ;
- retransmettre dans la même demi-trame vers ladite partie fixe (RFP) ledit premier paquet d'informations par l'intermédiaire dudit répéteur (RIP) durant une seconde tranche de temps de ladite première demi-trame (SA) suivant ladite première tranche de temps ;
- transmettre par l'intermédiaire de ladite partie fixe (RFP) un second paquet d'informations en réponse audit premier paquet d'informations durant une première tranche de temps de ladite seconde demi-trame (SB) ;
- recevoir ledit second paquet d'informations par l'intermédiaire dudit répéteur (RIP) ;
- stocker ledit second paquet d'informations dans ledit répéteur (RIP) et le dupliquer dans une seconde tranche de temps de ladite seconde demi-trame suivant ladite première tranche de temps ;
- modifier les informations relatives au numéro de la tranche de temps allouée dans les messages (Qt) transmis par la partie fixe (RFP) ;
- retransmettre dans la même demi-trame vers ladite partie portable (PP) ledit second paquet d'informations, par l'intermédiaire dudit répéteur (RIP), durant une seconde tranche de temps de ladite seconde demi-trame (SB) correspondant à la première tranche de temps de ladite première demi-trame (SA) durant laquelle ladite partie portable (PP) avait transmis précédemment ledit premier paquet d'informations.

2. Procédé selon la revendication 1, **caractérisé en ce qu'**il comprend les étapes suivantes :
- transmettre à partir de ladite partie fixe (RFP) une information adressée aux parties portables (PP) afin d'interdire l'accès à une séquence prédéterminée de tranches de temps ;
- transmettre par l'intermédiaire de la partie portable (PP) ledit premier paquet d'informations dans une première tranche de temps de la première demi-trame TX-DECT (SA) pour la partie portable (PP) ;
- recevoir ledit premier paquet d'informations par l'intermédiaire dudit répéteur (RIP) ;
- stocker ledit premier paquet d'informations, après avoir vérifié l'identité (FMID) de la partie fixe, dans ledit répéteur (RIP) et le dupliquer dans une seconde tranche de temps de ladite première demi-trame suivant ladite première tranche de temps, après un contrôle d'interférence ;
- marquer ledit premier paquet d'informations stocké dans ledit répéteur (RIP) ;
- retransmettre dans la même demi-trame vers ladite partie fixe (RFP) ledit premier paquet d'informations marqué par l'intermédiaire dudit répéteur (RIP) durant une seconde tranche de temps de ladite première demi-trame (SA) juste après ladite première tranche de temps ;
- transmettre par l'intermédiaire de ladite partie fixe (RFP) un second paquet d'informations, en réponse audit premier paquet d'informations marqué, durant une première tranche de temps de ladite seconde demi-trame (SB) avancée de deux positions par rapport à la première tranche de temps de ladite première demi-trame (SA) durant laquelle ladite partie fixe avait reçu ledit premier paquet d'informations ;
- recevoir ledit second paquet d'informations par l'intermédiaire dudit répéteur (RIP) ;
- stocker ledit second paquet d'informations dans ledit répéteur (RIP) et le dupliquer dans une seconde tranche de temps de ladite seconde demi-trame suivant ladite première tranche de temps en changeant l'identité (FMID) de la partie fixe (RFP) en l'identité (RFMID) du répéteur (RIP) ;
- modifier l'information relative au numéro de la tranche allouée dans les messages (Qt) transmis par la partie fixe (RFP) ;
- retransmettre vers ladite partie portable (PP) ledit second paquet d'informations par l'intermédiaire dudit répéteur (RIP) durant une seconde tranche de temps de ladite seconde demi-trame (SB) immédiatement après la première tranche de temps de ladite seconde demi-trame (SB) durant laquelle ledit répéteur (RIP) avait reçu précédemment ledit second paquet d'informations.

3. Procédé selon la revendication 2, **caractérisé en ce que** ladite information adressée aux parties portables (PP) interdit l'accès aux canaux temporels impairs afin de ne pas autoriser l'accès à une séquence prédéterminée de canaux.

4. Procédé selon la revendication 2, **caractérisé en ce que** ladite information adressée aux parties portables (PP) interdit l'accès aux canaux temporels pairs afin de ne pas autoriser l'accès à une séquence prédéterminée de canaux.

5. Procédé selon la revendication 2, **caractérisé en ce que** l'émission par ladite partie fixe (RFP) d'une information adressée aux parties portables (PP) est réalisée par le message PT « information sur les tranches interdites » afin d'interdire l'accès à une séquence prédéterminée de tranches de temps.

6. Procédé selon les revendications précédentes, **caractérisé en ce que** la partie fixe (RFP) est capable de garantir que les informations du système s'avèrent accessibles à toutes les parties portables (PP).

7. Procédé selon les revendications 1 et 2, **caractérisé en ce que** ladite opération de modification de l'information relative au numéro de tranche transmise par la partie fixe est exécutée par ledit répéteur (RIP) en changeant l'identité (FMID) de la partie fixe (RFP) dans le sens de la liaison descendante.

8. Procédé selon les revendications 1 et 2, **caractérisé en ce que** ledit répéteur (RIP) passe d'une phase réceptrice (RX) à une phase émettrice sur la base d'une seule tranche de temps.

9. Procédé selon la revendication 8, **caractérisé en ce que** ledit répéteur (RIP), juste avant d'entrer en service :
- balaie l'environnement radio à la recherche d'un bon support fictif sur lequel se verrouiller, et une fois le verrouillage réalisé,
- retransmet le support fictif détecté sur l'une des tranches suivantes, après un contrôle d'interférence, dans le sens de la liaison descendante ;
- prend la configuration TX/RX sur la base d'une tranche et acquiert la même séquence de balayage radio que celle sur laquelle la RFP est verrouillée.

10. Procédé selon la revendication 8, **caractérisé en ce que** ledit répéteur (RIP), durant la tranche de temps TX, s'il traite cette connexion, émet le signal radio reçu pendant les précédentes tranches RX.

11. Procédé selon la revendication 10, **caractérisé en ce que** ledit répéteur (RIP), durant la tranche de temps TX, s'il ne traite pas cette connexion, est toujours en mode RX.

12. Procédé selon la revendication 9, **caractérisé en ce que** ledit signal fictif est retransmis en changeant l'identité FMID (Fixed Mac Identity) de la partie fixe RFP en identité RFMID (Fixed Mac Identity) du répéteur et l'indication du numéro de tranche en numéro de la tranche choisie.

13. Procédé selon la revendication 2, **caractérisé en ce que** ladite opération de marquage est un marquage indirect.
